# DEMANDE DE BREVET EUROPEEN

(11) **EP 3 435 154 A1**
(43) Date de publication de la demande: **30.01.2019**
(21) Numéro de dépôt: 18185602.2
(22) Date de dépôt: 25.07.2018
(51) Int. Cl.: G03B 21/58

(54) **ECRAN DE VIDEO-PROJECTION ENROULABLE A TOILE COURBEE**

(30) Priorité: 27.07.2017 FR 1757128
(71) Demandeur: Prevel, Arnaud, 59113 Seclin (FR)
(72) Inventeur: Prevel, Arnaud, 59113 Seclin (FR)
(74) Mandataire: Zimmermann, Alain

(57) **Abrégé**

La présente invention se rapporte à un écran de vidéo-projection enroulable (1) comportant un carter supérieur transversal (2) renfermant un tambour rotatif horizontal (11) autour duquel s'enroule et se déroule une toile de projection (10) de type standard munie en partie inférieure d'un élément de lestage et de tension (30) et comportant une face avant de projection (12), caractérisé en ce qu'il comprend en outre un ensemble de moyens mécaniques (20) imposant, lors du déroulement de la toile (10), une courbure transversale à la face avant de projection (12), laquelle courbure imposée de la face avant (12) de la toile (10) subsistant par ailleurs en position déroulée d'utilisation de l'écran (1).

## Description

La présente invention se rapporte à un écran de vidéo-projection enroulable.

Il existe dans l'art antérieur de nombreux types d'écrans de vidéo-projection, qu'il s'agisse d'une utilisation dans une salle de cinéma ou dans un domicile, voire une solution transportable. Ces écrans se répartissent globalement en deux catégories, les toiles montées/tendues sur un cadre fixe, tels que ceux des cinémas ou de certaines salles privées personnelles, et les écrans enroulables qui sont plus souvent utilisés à domicile accroché à une paroi (plafond ou mur) en mode statique ou transportable et relié à un pied repliable de support.

Or, si les écrans de type statiques peuvent être incurvés, ils sont souvent de très grandes dimensions. A l'opposé, les écrans enroulables sont totalement plans et ne sont pas optimisés pour la vision humaine.

Un but de la présente invention est donc de résoudre les problèmes cités précédemment à l'aide d'une solution simple à mettre en oeuvre, fiable et efficace.

Plus précisément, la présente invention a pour objet un écran de vidéo-projection enroulable comportant un carter supérieur transversal renfermant un tambour rotatif horizontal autour duquel s'enroule et se déroule une toile de projection de type standard munie en partie inférieure d'un élément de lestage et de tension et comportant une face avant de projection, caractérisé en ce qu'il comprend en outre un ensemble de moyens mécaniques imposant, lors du déroulement de la toile, une courbure transversale à la face avant de projection, laquelle courbure imposée de la face avant de la toile subsistant par ailleurs en position déroulée d'utilisation de l'écran.

Selon des modes de réalisation préférés de la présente invention :
- ladite courbure est constante quelle que soit la position déroulée de la toile ;
- les moyens de courbure comportent deux profilés transversaux disposés dans le carter supérieur, un profilé amont, placé derrière la face avant de projection de la toile, et un profilé aval placé devant ladite face avant de projection de la toile, de sorte que la courbure est imposée à la toile qui est coincée entre ces deux profilés transversaux ;

- le profilé transversal amont est plus proche du tambour rotatif que le profilé transversal aval ; ou
- le profilé transversal aval est plus proche du tambour rotatif que le profilé transversal amont ;
- les profilés transversaux de courbure sont cintrés vers l'arrière et disposés l'un par rapport à l'autre de sorte que chaque point de la toile, quelle que soit sa position longitudinale le long du profilé transversal aval, parcourt la même course de déplacement par rapport audit profilé aval lors du déroulement de la toile, de sorte que deux points de l'écran qui se situent sur une même ligne transversale de l'écran en position enroulée se retrouvent sur une même ligne horizontale en position déroulée dudit écran ;
- l'élément transversal de lestage présente une courbure régulière et symétrique qui s'étend dans un plan horizontal et qui correspond à la courbure de l'ensemble de la toile dans la position déroulée d'utilisation de l'écran, et la projection sur un plan horizontal du profilé transversal aval présente une courbure identique à celle de l'élément transversal de lestage ;
- le rayon de courbure du profilé aval, projeté sur un plan horizontal, est d'environ 10 m pour un écran de 2m de largeur ;
- le profilé transversal amont (21) s'étend dans un plan incliné par rapport au plan dans lequel s'étend le profilé transversal aval (22), de préférence selon un angle d'environ 45° ±5° ; et
- les profilés transversaux sont des tubes à section ronde ou ovale.

L'invention va maintenant être décrite plus en détail en référence à des modes de réalisation particuliers donnés à titre d'illustration uniquement et représentés sur les figures annexées dans lesquelles :
- la figure 1 est une vue en perspective d'un écran de vidéo-projection enroulable conforme à la présente invention ;
- la figure 2 est une vue de dessus de la figure 1 ;
- la figure 3 est une vue de face de la figure 1 ; et
- la figure 4 est une vue de côté de la figure 1.

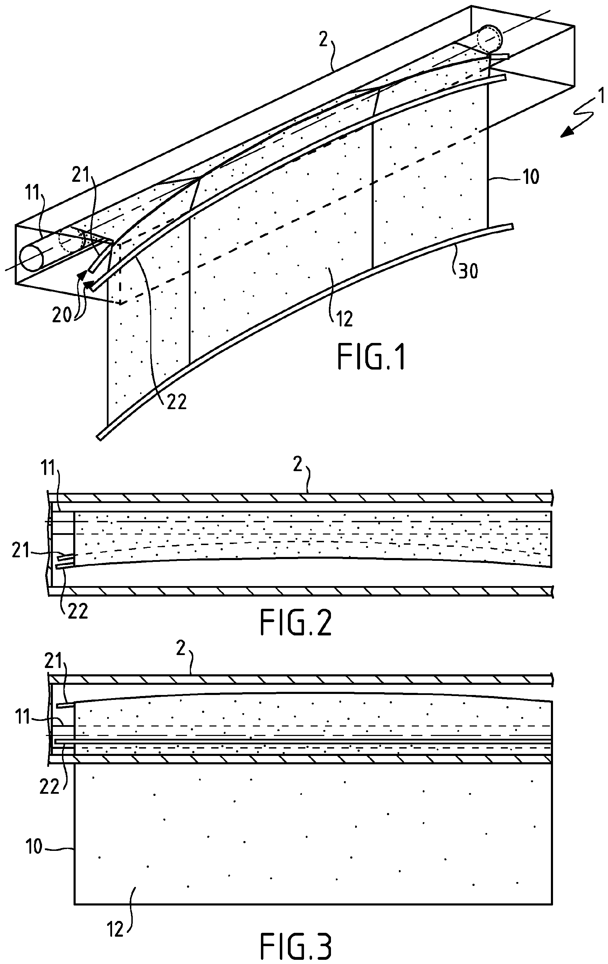

La figure 1 représente un écran de vidéo-projection déroulable/enroulable 1 comportant un carter supérieur transversal 2 se présentant typiquement sous la forme d'un boîtier de forme parallélépipédique à section rectangulaire muni d'une d'ouverture inférieure 3. Ce carter 2, qui peut être accroché en hauteur à un mur ou à un plafond, renferme une toile enroulable/déroulable de projection 10 de type connu, des moyens de courbure 20 et un élément de lestage 30.

Plus précisément, la toile de projection 10 est enroulée sur un tambour rotatif cylindrique 11 s'étendant horizontalement en travers du carter 2. De préférence le tambour 11 est motorisé mais la toile de projection 10 peut aussi être déroulée à la main en agissant par exemple sur l'élément de lestage 30 en tirant ce dernier vers le sol.

La toile 10 présente quant à elle une face avant de projection 12, par exemple de couleur blanche et pourvue de micro-perforations (non représentées) adaptées pour laisser passer le son provenant d'enceintes acoustiques pouvant être placées derrière ladite toile 10 lorsque celle-ci est déroulée.

En partie aval (bas) de l'écran 1 se trouve un élément de lestage 30 fixé à l'extrémité inférieure de la toile 10 et se présentant sous la forme d'une barre cintrée 31 de section ronde ovale ou carrée et réalisée par exemple en métal plein.

En partie amont (haute) de l'écran 1, disposés à l'intérieur du carter 2, se trouvent les moyens mécaniques de courbure 20 se présentant plus particulièrement sous la forme d'un premier profilé transversal amont 21 et d'un second profilé transversal aval 22.

Plus précisément, le profilé transversal amont 21 est placé derrière la toile de projection 10 et le profilé aval 22 est placé devant la face avant de projection 12 de ladite toile 10, de sorte qu'une courbure constante est imposée à la toile 10 qui est coincée entre ces deux profilés transversaux 21 et 22 tout au long de son déroulement et de sa descente vers le sol, comme cela sera décrit ultérieurement. Dans le cas présent, la courbure est de type concave quand l'utilisateur regarde l'écran de face. Lors de cette descente, la toile passe par l'ouverture 3 qui peut présenter une section de forme arquée ayant sensiblement la même courbure que celle de l'élément de lestage 30, ou une section rectangulaire.

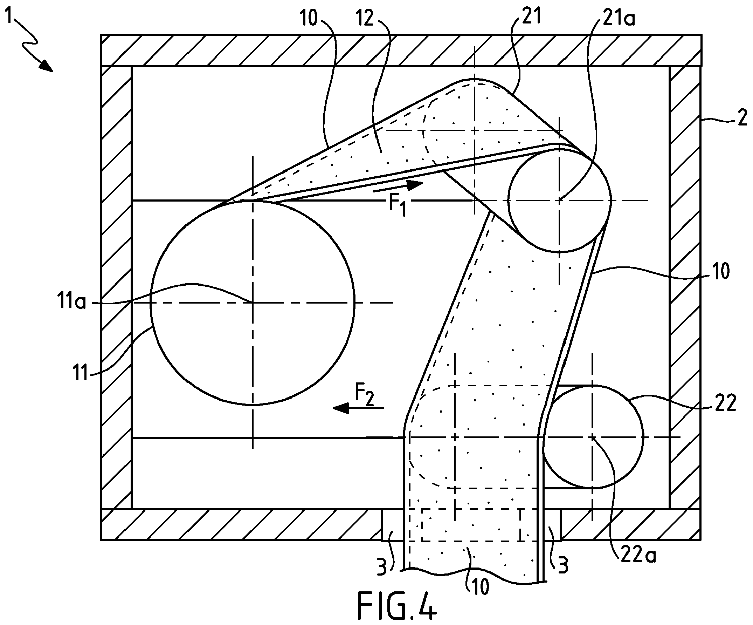

Comme cela est visible sur la figure 4, le profilé transversal amont 21, et plus précisément son axe principal longitudinal 21a, est placé légèrement plus haut que l'axe de rotation 11a du tambour rotatif 11, tandis que le profilé transversal aval 22, et plus précisément son axe longitudinal 22a, est placé légèrement plus bas que l'axe de rotation 11a dudit tambour rotatif 11.

De même, le profilé transversal amont 21 est disposé plus proche du tambour 11 que le profilé transversal aval 22.

Comme cela est illustré sur la figure 3, les deux profilés 21 et 22 sont cintrés vers l'arrière de manière régulière chacun selon un rayon de courbure sensiblement constant, mais différent, en direction du tambour 11 et donc de l'arrière de la toile de projection 10. Dans le cas présent, la courbure, rapportée dans un plan horizontal, du profilé transversal amont 21 est plus importante que celle du profilé transversal aval 22. En d'autres termes, le rayon de courbure du profilé transversal amont 21 est inférieur à celui du profilé transversal aval 22. Typiquement le rayon de courbure du profilé transversal amont 21 peut être d'environ 10m pour une toile de projection 10 de 2 mètres de largeur, tandis que le rayon de courbure du profilé transversal aval 22 sera de 11m environ.

En outre, comme cela est visible sur la figure 3, le profilé transversal aval 22 s'étend uniquement selon un plan horizontal tandis que la courbure du profilé transversal amont 21 s'étend également vers le haut (voir figure 4) dans un plan incliné par rapport au plan dans lequel s'étend le profilé transversal aval 22. Par exemple, le profilé transversal amont 21 s'étend vers l'arrière et vers le haut dans un plan incliné à environ 45° ±5° par rapport au plan horizontal dans lequel s'étend le profilé transversal aval 22.

Le fonctionnement de cet écran 1 est le suivant :
A mesure que la toile de projection 10 se déroule du tambour rotatif 11 et descend vers le sol au travers de la fente 3 du carter 2, cette toile étant coincée entre les profilés amont 21 et aval 22, plus spécifiquement entre l'avant du profilé transversal amont 21 et l'arrière du profilé transversal aval 22, ladite toile 10 prend la forme que lui imposent ces moyens mécanique de courbure 20 de sorte qu'elle reste courbée tout au long de sa descente, ladite courbure étant conservée une fois la toile 10 entièrement descendue.

L'élément transversal de lestage 30 présentant une courbure régulière et symétrique qui s'étend dans un plan horizontal et qui correspond à la courbure du profilé transversal aval 22, la courbure de l'ensemble de la toile de projection 10 dans sa position déroulée d'utilisation est également la même que celle du profilé transversal aval 22 et de l'élément de lestage 30.

Plus précisément, la courbure de la toile de projection 10, lorsque cette dernière est déroulée, est égale à la projection du rayon de courbure du profilé transversal aval 22 sur un plan horizontal.

Par ailleurs, l'élément de lestage 30, lui aussi cintré, permet de tendre la toile 10 vers le bas par l'effet de son propre poids tout en contribuant à la conservation de la courbure.

En raison de la configuration géométrique des différents éléments les uns par rapport aux autres, le profilé transversal amont 21 a tendance à pousser la toile 10 vers l'avant (et un peu vers le haut) de l'écran 1 (flèche F1) pour l'éloigner du tambour rotatif 11 tandis que le profilé transversal aval 22 a tendance à tirer ladite toile 10 pour la ramener vers l'arrière (flèche F2) en direction du tambour rotatif 11, ce qui crée une tension dans ladite toile de projection 10.

A mesure que la toile de projection 10 se déroule, chaque point de ladite toile, quelle que soit sa position longitudinale le long du profilé transversal aval 22, parcourt la même course de déplacement par rapport audit profilé aval 22 lors du déroulement de la toile. Ainsi, deux points de la toile qui se situent sur une même ligne transversale de l'écran en position enroulée de ce dernier se retrouvent sur une même ligne horizontale en position déroulée dudit écran. Ceci garantit que la toile reste non seulement courbée mais également tendue, sans pli ou défaut pouvant nuire à la projection.

Ainsi, l'écran 1 de la présente invention comporte une toile de projection 10 à la fois déroulable/enroulable autour d'un tambour rotatif cylindrique 11 et une courbure constante sur toute sa hauteur une fois ladite toile 10 totalement déroulée, ce qui n'existait pas auparavant. Cette courbure de la toile de projection 10 induite par la forme et la position respective des profilés transversaux 21 et 22 améliore le confort visuel de visionnage d'un film projeté sur ladite toile, et l'écran 1 reste, si besoin, transportable (cas où le carter serait monté sur un trépied).

Lorsque la toile de projection 10 est enroulée, sa courbure disparait entre le profilé transversal amont 21 et le tambour de sorte qu'elle peut s'enrouler, là encore sans aucun pli, sur le cylindre du dit tambour 2.

Il doit être bien entendu que la description détaillée de l'objet de l'Invention, donnée uniquement à titre d'illustration, ne constitue en aucune manière une limitation, les équivalents techniques étant également compris dans le champ de la présente invention.

Ainsi, le profilé amont peut être placé devant la face de projection de la toile et le profilé aval peut être placé derrière ladite face de projection de la toile, de sorte que la courbure est imposée à la toile qui est coincée entre ces deux profilés transversaux.

Ce type d'écran est adapté à d'autres applications que celles décrites, par exemple des écrans publicitaires enroulables.

Bien entendu, la courbure de la toile de l'écran peut être convexe (quand l'utilisateur regarde l'écran de face) en inversant la courbure des deux profilés transversaux qui sont donc cintrés vers l'avant, le profilé aval restant placé devant la face avant de la toile tandis que le profilé amont est placé derrière ladite toile.

## Revendications

1. Ecran de vidéo-projection enroulable (1) comportant un carter supérieur transversal (2) renfermant un tambour rotatif horizontal (11) autour duquel s'enroule et se déroule une toile de projection (10) de type standard munie en partie inférieure d'un élément de lestage et de tension (30) et comportant une face avant de projection (12), comprenant en outre un ensemble de moyens mécaniques de courbure (20) imposant à la face avant de projection (12), lors du déroulement de la toile (10), une courbure transversale, laquelle courbure imposée de la face avant (12) de la toile (10) subsistant par ailleurs en position déroulée d'utilisation de l'écran (1), ***caractérisé en ce que*** les moyens mécaniques de courbure (20) comportent deux profilés transversaux de courbure (21, 22) disposés dans le carter supérieur (2), un profilé amont (21), placé derrière la face avant de projection (12) de la toile (10), et un profilé aval (22) placé devant ladite face avant de projection (12) de la toile (10), de sorte que la courbure est imposée à la toile (10) qui est coincée entre ces deux profilés transversaux de courbure (21, 22) et **en ce que** les profilés transversaux de courbure (21, 22) sont cintrés vers l'arrière et disposés l'un par rapport à l'autre de sorte que chaque point de la toile (10), quelle que soit sa position le long du profilé transversal aval (22), parcourt la même course de déplacement par rapport audit profilé aval (20) lors du déroulement de la toile (10), de sorte que deux points de la toile qui se situent sur une même ligne transversale de l'écran en position enroulée de ce dernier se retrouvent sur une même ligne horizontale en position déroulée dudit écran.

2. Ecran (1) selon la revendication 1, **caractérisé en ce que** ladite courbure est constante quelle que soit la position déroulée de la toile (10) .

3. Ecran (1) selon l'une quelconque des revendications 1 ou 2, **caractérisé en ce que** le profilé transversal amont (21) est plus proche du tambour rotatif (11) que le profilé transversal aval (22).

4. Ecran (1) selon l'une quelconque des revendications 1 à 3, **caractérisé en ce que** le profilé transversal aval (22) est plus proche du tambour rotatif (11) que le profilé transversal amont (21) .

5. Ecran (1) selon l'une quelconque des revendications 1 à 4, **caractérisé en ce que** :
- l'élément transversal de lestage (30) présente une courbure régulière et symétrique qui s'étend dans un plan horizontal et qui correspond à la courbure de l'ensemble de la toile dans la position déroulée d'utilisation de l'écran, et
- la projection sur un plan horizontal du profilé transversal aval (22) présente une courbure identique à celle de l'élément transversal de lestage (30) .

6. Ecran selon l'une quelconque des revendications 1 à 5, **caractérisé en ce que** le rayon de courbure du profilé aval, projeté sur un plan horizontal, est d'environ 10 m pour un écran de 2m de largeur.

7. Ecran (1) selon l'une quelconque des revendications 1 à 6, **caractérisé en ce que** le profilé transversal amont (21) s'étend dans un plan incliné par rapport au plan dans lequel s'étend le profilé transversal aval (22), de préférence selon un angle d'environ 45° +5°_{.}

8. Ecran (1) selon l'une quelconque des revendications 1 à 7, **caractérisé en ce que** les profilés transversaux (21, 22) sont des tubes à section ronde ou ovale.
